(19) **Europäisches Patentamt**
**European Patent Office**
**Office européen des brevets**

(11) **EP 4 764 621 A1**

(12) **EUROPEAN PATENT APPLICATION**

(43) Date of publication:
**24.06.2026 Bulletin 2026/26**

(21) Application number: **24315588.4**

(22) Date of filing: **17.12.2024**

(51) International Patent Classification (IPC):
*G02B 1/04* (2006.01)    *C08F 2/02* (2006.01)
*C08F 2/44* (2006.01)    *C08F 218/18* (2006.01)
*C08K 5/132* (2006.01)    *C08K 5/526* (2006.01)

(52) Cooperative Patent Classification (CPC):
(C-Sets available)
**C08F 218/18; C08F 2/44; C08F 2/50; C08K 5/132;**
**C08K 5/526; G02B 1/041**                              (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **ESSILOR INTERNATIONAL**
**94220 Charenton-Le-Pont (FR)**

(72) Inventors:
• **Xie, Cun Fei**
**SHANGHAI, 201600 (CN)**
• **Pan, Chun**
**SHANGHAI, 201600 (CN)**

(74) Representative: **Korakis-Ménager, Sophie**
**Essilor International**
**Propriété Intellectuelle**
**147, rue de Paris**
**94220 Charenton-le-Pont (FR)**

(54) **BLUE CUT POLYMERIZABLE COMPOSITIONS**

(57)     A polymerizable composition for making thermosetting materials containing allylic monomers and/or oligomers and diisopropyl peroxydicarbonate (IPP) as an initiator, wherein the said composition comprises:

• A UV absorber in an amount ranging from 0.1 to 2 % wt,
• A phosphite based molecule in an amount ranging from 0.2% wt to 1% wt.

EP 4 764 621 A1

(52) Cooperative Patent Classification (CPC): (Cont.)

C-Sets
**C08F 218/18, C08F 216/125;**
**C08K 5/132, C08L 31/08;**
**C08K 5/526, C08L 31/08;**
**G02B 1/041, C08L 69/00**

## Description

### Technical field

This invention relates to a polymerizable composition for making optical lenses with good blue light resistance properties and method for making such optical lenses, especially ophthalmic lenses.

### Background information and prior art

Over the past years, ophthalmic lenses made of polymer material have become standard over traditional glass-made products. They present the advantages of being light, impact resistant, and can also be easily molded or colored with the application of several types of dyes. The establishment of a polymerizable composition to obtain such lens, can face many challenges related to the compatibility of the main ingredients but also the properties we wish to obtain of the final product, such as transparency, coloration, anti-abrasion.

One particular property sought is the absorption of blue light coming from sunlight or from our daily technological devices. Laboratory studies have shown that too much exposure to blue light may damage light-sensitive cells in the retina. This causes changes that resemble those of macular degeneration, which can lead to permanent vision loss.

Ophthalmic lens manufacturers have developed blue cut lenses to filter and reduce retinal exposure to blue light. For ophthalmic lenses, acrylic monomers are usually employed for making organic substrates, but they do present some technical issues like low yield, complex procedures and formulas in manufacturing, coating crazing issues under high temperature, high humidity conditions for high water absorption or incompatibility with frameless glasses.

The main ingredients when making a low refractive blue cut lens substrate usually comprise one or several monomers or oligomers, an initiator and a blue light absorber. Diisopropyl peroxydicarbonate (IPP), is the most well-known initiator for polymer cross-linking. However, this compound tends to oxidize commonly used blue light absorber resulting in a loss of blue light resistance and induce a yellowish coloration in the substrate.

**Several** formulations have been elaborated by using mild initiators which are however too expensive to apply.

It is therefore an object of the invention to provide a polymerizable composition which overcomes the issues mentioned in the previous paragraphs. In other words, there is a need to provide a polymerizable composition based on allylic monomers for making thermosetting materials, in this case ophthalmic lenses, avoiding the main issues from acrylic monomers, which has good blue cut properties, reduces the yellowing effect due to the interaction between radical and UV absorber during polymerization and which manufacturing is affordable. It would be also required to provide optical article which are in adequation with different light transmission requirements for wavelength range between 385 nm and 415 nm, between 415 nm and 445nm, between 445 nm and 475 nm and between 475 nm and 505 nm. These requirements are disclosed in the technical requirements on application of light health and light safety of coating for protection against blue light established by the China National Institute of Standardization (CNIS).

### Summary

**The** present invention relates to a polymerizable composition for making thermosetting materials such as an optical article with a refractive index of 1.50 or above, preferably 1.53 or above, more preferably 1.53 to 1.58, containing allylic monomers and diisopropyl peroxydicarbonate (IPP) as an initiator, wherein the said composition comprises:

- A UV absorber in a range between 0.15 % wt and 0.25 % wt relative to the total mass of the said composition,
- A phosphite based molecule in a range between 0.2% wt and 2% wt relative to the total mass of the said composition.

**The** amount of UV absorber and phosphite based molecule enable the use of diisopropyl peroxydicarbonate (IPP) which is a strong initiator but commercially affordable compared to mild initiators and without degrading the UV absorber. This polymerizable composition can also be applied for other solid products than optical articles.

The invention also relates to a process for making an optical article using a polymerizable composition and with a refractive index of 1.50 or above, preferably 1.53 or above, more preferably 1.53 to 1.58, containing allylic monomers and/or oligomers and diisopropyl peroxydicarbonate (IPP) as an initiator, wherein the said composition comprises:

- A UV absorber in a range between 0.15 % wt and 0.25 % wt relative to the total mass of the said composition,
- A phosphite based molecule in a range between 0.2% wt and 2% wt relative to the total mass of the said composition.

This process allows the making of an optical article presenting good blue cut properties, with a low or without yellowing effect.

The optical article according to the invention are preferably optical lens, preferably ophthalmic lenses that can be incorporated in an eyewear.

The invention also discloses a lens made from a polymerizable composition, with a refractive index of 1.50 or above, preferably 1.53 or above, more preferably 1.53 to 1.54, containing allylic monomers and/or oligomers and diisopropyl peroxydicarbonate (IPP) as an initiator, wherein the said composition comprises:

- A UV absorber in a range between 0.15 % wt and 0.25 % wt relative to the total mass of the said composition,
- A phosphite based molecule in a range between 0.2% wt and 2% wt relative to the total mass of the said composition.

In one embodiment, these lenses exhibit good blue cut properties without yellowing effect and a light transmittance in adequation with the technical requirements for wavelength range between 385 nm and 415 nm, between 415 nm and 445nm, between 445 nm and 475 nm and between 475 nm and 505 nm. These requirements are disclosed in the technical requirements on application of light health and light safety of coating for protection against blue light established by the China National Institute of Standardization (CNIS).

## Detailed description of embodiments

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," "includes," or "consisting of" one or more steps or elements possesses those one or more steps or elements but is not limited to possessing only those one or more steps or elements.

The term "lens" means an organic or inorganic glass lens, preferably an organic lens, comprising a lens substrate having one or more surfaces which may be coated with one or more coatings of various natures.

The term "monomer" means a small organic molecule or a small oligomer. Small oligomers are molecules with two to ten units with a molar mass reaching until 2000 g.mol-1.

The term "pigment" means a coloring substance comprising an inorganic or organic molecule or a complex molecule, preferably insoluble in the polymerizable composition and final optical article.

Unless otherwise specified, the refractive indexes referred to in the present invention are expressed at 20-25°C for a wavelength of 550 nm.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

The following innovation is a polymerizable composition for making thermosetting materials such as an optical article having a refractive index of 1.50 or above, preferably 1.53 or above, more preferably 1.53 and 1.58, containing allylic monomers and/or oligomers and diisopropyl peroxydicarbonate (IPP) as an initiator, wherein the said composition comprises a UV absorber and a phosphite based molecule. This polymerizable composition can also be applied for other solid products than optical articles.

The amount of UV absorber used in the polymerizable composition can range from 0.1 % wt to 2 % wt relative to the total mass of the said composition, preferably from 0.1 % wt to 1 % wt relative to the total mass of the said composition, more preferably, from 0.12 % wt to 0.5 % wt relative to the total mass of the said composition, even more preferably from 0.15 % wt to 0.25 % wt relative to the total mass of the said composition.

The amount of the phosphite based molecule used in the polymerizable composition can range from 0.2% wt to 1% wt relative to the total mass of the said composition, preferably from 0.35 % wt to 0.99 % wt relative to the total mass of the said composition, more preferably from 0.38 % wt to 0.975 % wt relative to the total mass of the said composition.

The polymerizable composition mostly comprise one or more allylic monomers and/or oligomers. When several allylic monomers and/or oligomers are used, one aromatic allylic compound is always mainly present. The amount of this first aromatic allylic monomer and/or oligomer can range from 65 % wt to 95 %wt relative to the total mass of the said composition, preferably from 65 % wt to 80 % wt relative to the total mass of the said composition, more preferably from 65 % wt to 75 % wt relative to the total mass of the said composition.

In case the polymerizable composition comprises several allylic compounds, the second main allylic monomer and/or oligomer(s) is either aromatic or non aromatic. In one embodiment the second main allylic monomer and/or oligomer(s) is preferably non aromatic. This second main allylic compound is used in an amount ranging from 10 % wt to 30 %wt relative to the total mass of the said composition, preferably from 10 % wt to 25 % wt relative to the total mass of the said composition.

In an embodiment, to trigger the polymerization of the polymerizable composition, diisopropyl peroxydicarbonate (IPP) is used in an amount ranging from 0.5 % wt to 5 % wt relative to the total mass of the said composition, preferably from 1 % wt to 5 % wt relative to the total mass of the said composition, more preferably from 3 % wt to 5 % wt relative to the total mass of the said composition.

The polymerizable composition also comprises at least one mineral pigment as a color balancing agent, to ensure the color transparency and avoid the yellowness produced by the presence of the UV absorber and diisopropyl peroxydicarbonate. This pigment is used in an amount ranging from 0.0007 % wt to 0.02 % wt relative to the total mass of the said composition.

In one embodiment, the mineral pigment used in the polymerizable composition is aluminium sodium orthosilicate tetrathietane (3:3:3:1), also known as sodium aluminosilicate violet or ultramarine violet pigment.

In one embodiment, the polymerizable composition can comprise two pigments. The total amount of pigment should be in the same range mentioned previously in the composition having one mineral pigment. The combination and amounts of each pigment should give the same properties of color balancing agent as the ultramarine violet pigment used alone. The nature of these pigments can be mineral or organic compounds or between a mineral and an organic compound. For instance, a combination can be made between aluminium sodium orthosilicate trisulfane-1,3-diide (6:8:6:1), also known as ultramarine blue pigment and 2,9-dimethylquinacidrone, also known as pigment red 122.

Regarding the choice of the main allylic monomer and/or oligomer(s), the polymerizable composition comprise a compound chosen from the following group: diallyl phthalate; diallyl phthalate oligomers, diallyl isophthalate, diallyl isophthalate oligomers, diallyl terephthalate, diallyl terephthalate oligomers or a mixture of them. Preferred monomers and/or oligomers are diallyl isophthalate and diallyl terephthalate compounds. This list of compounds do not limit the choice of allylic monomer and/or oligomer which could be used for the process for making the polymerizable composition.

Regarding the choice of the second main allylic monomer, the polymerizable composition comprise a compound chosen from diallyl diglycol carbonate (ADC) in monomer and oligomer form. Diallyl diglycol carbonate in monomer form is preferably used. This list of compounds does not limit the choice of allylic monomer and/or oligomer which could be used for the process for making the polymerizable composition.

In one embodiment the polymerizable composition can also contains a third monomer and/or oligomer different than an allylic based compound. In one embodiment, the third monomer and/or oligomer incorporated in the polymerizable composition can be vinyl ester monomer and/or oligomer. This compound can be used in an amount ranging from 2 % wt to 20 % wt relative to the total mass of the said composition, preferably from 2.5 % wt to 19 % wt relative to the total mass of the said composition.

Regarding the choice of the UV absorber, the polymerizable composition comprises a benzophenone-based molecule. The preferred UV absorber used for this innovation is 2,2'-dihydroxy-4,4'-dimethoxybenzophenone also known as BP-6.

Regarding the choice of the phosphite based molecule, the polymerizable composition comprises a compound chosen from the following group: triphenyl phosphite, diisodecyl pentaerythritol diphosphite, poly(dipropylene glycol) phenyl phosphite, tripropyl phosphite, tributyl phosphite, tris(2-ethylhexyl) phosphite, trisdecyl phosphite, triisodecyl phosphite, triisotridecyl phosphite, trioctadecyl phosphite, tris(nonylphenyl) phosphite, diphenyl decyl phosphite, diphenyl isodecylphosphite, diphenyl isooctyl phosphite, bis(2-ethylhexyl) phenyl phosphite, phenyl didecyl phosphite, phenyl diisodecyl phosphite, O,O'-Dioctadecylpentaerythritol bis(phosphite), bis(2,4-di-tert-butylphenyl) pentaerythritol diphosphite or a mixture of them. Preferred monomers are triphenyl phosphite, diisodecyl pentaerythritol diphosphite, and poly(dipropylene glycol)phenyl phosphite. These examples do not limit the choice of phosphite based molecule which could be used for the process for making the polymerizable composition.

The polymerizable composition can also comprise additives compounds present in the commercial products containing the main compounds used to establish the said composition. These additives can be of various nature and can be present in an amount ranging from 0 % wt to 10 % wt relative to the total mass of the said composition, preferably from 0 % wt to 8 % wt relative to the total mass of the said composition.

A second object of this invention a process for making an optical article using a polymerizable composition and with a refractive index of 1.50 or above, preferably 1.53 or above, more preferably 1.53 and 1.58, containing allylic monomers and diisopropyl peroxydicarbonate (IPP) as an initiator, wherein the said composition comprises:

- A UV absorber in a range between 0.15 % wt and 0.25 % wt relative to the total mass of the said composition,
- A phosphite based molecule in a range between 0.2% wt and 2% wt relative to the total mass of the said composition.

This process allows the making of an optical article presenting good blue cut properties, without yellowing effect.

The process comprises a filling step of a molding system with the polymerizable composition, and a curing step by heating the molding system after the filling step. The curing step last for at least twenty hours and is divided in several phases of temperature and heating rate variations. In a first phase, the temperature of the molding system containing the polymerizable composition is initially at 25°C when introduced in the furnace. The temperature is raised up to 35°C in 15 minutes. In a second phase the temperature is exponentially increased up to 85°C in 16 hours. In a third phase, the temperature is maintained at 85°C for at least 2 hours. In a fourth and last phase, the temperature is decreased to 75°C in 1 hour.

The optical article obtained by the process are preferably optical lens, preferably ophthalmic lenses that can be incorporated in an eyewear.

A third object of this invention is a lens article made from a polymerizable composition, with a refractive index of 1.50 or above, preferably 1.53 or above, more preferably 1.53 and 1.58, containing allylic monomers and diisopropyl peroxydicarbonate (IPP) as a initiator, wherein the said composition comprises:

- A UV absorber in a range between 0.15 % wt and 0.25 % wt relative to the total mass of the said composition,
- A phosphite based molecule in a range between 0.2% wt and 2% wt relative to the total mass of the said composition.

These lenses exhibit good blue cut properties without yellowing effect. The light transmissions of these optical articles in adequation with different transmission requirement for different wavelength range disclosed in the technical requirements on application of light health and light safety of coating for protection against blue light established by the China National Institute of Standardization (CNIS).

These requirements are a transmission inferior to 75% between 385 nm and 415 nm, a transmission inferior or equal to 80% between 415 nm and 445 nm, a transmission superior to 80% between 445 nm and 475 nm and between 475 nm and 505 nm.

### Example

Chemicals used and polymerizable composition preparation

Several polymerizable compositions were prepared by combining:

- diallyl terephthalate (CAS: 1026-92-2) as main allylic monomer,
- diallyl diglycol carbonate (ADC;CAS: 142-22-3) as second main allylic monomer,
- diisopropyl peroxydicarbonate (IPP, CAS: 105-64-6) as an initiator,
- 2,2'-Dihydroxy-4,4'-dimethoxybenzophenone (BP-6; CAS: 131-54-4) as a UV absorber,
- triphenyl phosphite (TPP; CAS: 101-02-0) or Poly(dipropyleneglycol)phenyl phosphite (CAS: 80584-86-7) or 3,9-bis(isodecyloxy)-2,4,8,10-tetraoxa-3,9-diphosphaspiro[5.5]undecane (Diisodecyl pentaerythritol diphosphite),(CAS : 26544-27-4) as phosphite based molecules,
- aluminium sodium orthosilicate tetrathietane (3:3:3:1) (Ultramarine violet; CAS: 12739-96-9) or aluminium sodium orthosilicate trisulfane-1,3-diide (6:8:6:1) (Ultramarine blue;CAS: 57455-37-5) combined with 2,9-dimethylquinacidrone (CI Pigment Red 122;CAS: 980-26-7) as pigments.

TABLE I disclose several examples of polymerizable compositions which have been used to produce ophthalmic lenses. Five counter examples have been prepared to serve as references when comparing to the composition of the current invention.

The amounts or ranges of amount presented in TABLE I, are the ratios of the amounts of the compounds in their "pure states" relative to the total mass of the compositions and were calculated from the Material safety data sheets obtained from the providers.

Comparative example 1 is a blank composition comprising the main allylic monomers with diisopropyl peroxydicarbonate.

Comparative example 2 disclose a composition similar to Comparative example 1 but the addition of 2,2'-Dihydroxy-4,4'-dimethoxybenzophenone (BP-6).

Comparative example 3 disclose a composition similar to Comparative example 2 but with the addition of aluminium sodium orthosilicate tetrathietane (3:3:3:1) (Ultramarine violet).

Comparative example 4 and 5 disclose a composition similar to Comparative example 3 but with the addition of triphenyl phosphite (TPP) as phosphite based molecule. The amount of TPP is different between both examples to analyze its influence on the yellow index. These amounts are also outside the range disclosed for the current invention.

Examples 1 to 8 disclose several compositions according to the present invention with range variation of the phosphite based molecule, variation of the nature of phosphite based molecules, pigment, monomer.

TABLE I

| | Monomer % wt | | Initiator % wt | | Pigment % wt | | UV absorber % wt | | Phosphite % wt | | Additives* %wt |
|---|---|---|---|---|---|---|---|---|---|---|---|
| Counter EX1 | Diallyl terephthalate* | 69.48-76.43 | IPP | 3.19 | - | - | - | - | - | - | 0.77-7.72 |
| | ADC | 23.51 | | | | | | | | | |
| Counter EX2 | Diallyl terephthalate* | 69.48-76.43 | IPP | 3.19 | - | - | BP-6 | 0.28 | - | - | 0.77-7.72 |
| | ADC | 23.51 | | | | | | | | | |
| Counter EX3 | Diallyl terephthalate* | 69.48-76.43 | IPP | 3.19 | Ultramarine violet | 0.01 | BP-6 | 0.28 | - | - | 0.77-7.72 |
| | ADC | 23.51 | | | | | | | | | |
| Counter EX4 | Diallyl terephthalate* | 69.48-76.43 | IPP | 3.19 | Ultramarine violet | 0.01 | BP-6 | 0.28 | TPP | 0.1 | 0.77-7.72 |
| | ADC | 23.51 | | | | | | | | | |
| Counter EX5 | Diallyl terephthalate* | 69.48-76.43 | IPP | 3.19 | Ultramarine violet | 0.01 | BP-6 | 0.28 | TPP | 1.19 | 0.77-7.72 |
| | ADC | 23.51 | | | | | | | | | |
| * UNO55 was produced by UNO Corporation, Korea; contains 90 - 99% of Diallyl terephthalate and 1-9 % of additives | | | | | | | | | | | |

EP 4 764 621 A1

TABLE I

| | | Monomer % wt | | Initiator % wt | | Pigment % wt | | UV absorber % wt | | Phosphite % wt | | Additives % wt |
|---|---|---|---|---|---|---|---|---|---|---|---|---|
| EX1 | Diallyl terephthalate* | 69.48-76.43 | IPP | 3.19 | Ultramarine violet | 0.01 | BP-6 | 0.26 | TPP | 0.4 | 0.77-7.72 |
| | ADC | 23.51 | | | | | | | | | |
| EX2 | Diallyl terephthalate | 69.48-76.43 | IPP | 3.19 | Ultramarine violet | 0.01 | BP-6 | 0.28 | TPP | 0.69 | 0.77-7.72 |
| | ADC | 23.51 | | | | | | | | | |
| EX3 | Diallyl terephthalate* | 69.48-76.43 | IPP | 3.19 | Ultramarine violet | 0.01 | BP-6 | 0.28 | TPP | 0.99 | 0.77-7.72 |
| | ADC | 23.51 | | | | | | | | | |
| EX4 | Diallyl terephthalate* | 69.48-76.43 | IPP | 3.19 | Ultramarine violet | 0.01 | BP-6 | 0.28 | TPP | 0.4 | 0.77-7.72 |
| | ADC | 23.5 | | | | | | | | | |
| EX5 | Diallyl terephthalate* | 69.48-76.43 | IPP | 3.19 | Ultramarine blue | 0.006 | BP-6 | 0.28 | TPP | 0.4 | 0.77-7.72 |
| | ADC | 23.05% | | | Cl Pigment Red 122 | 0.003 | | | | | |
| EX6 | Diallyl terephthalate* | 69.48-76.43 | IPP | 3.19 | Ultramarine violet | 0.01 | BP-6 | 0.28 | PDP | 0.2 | 0.77-7.72 |
| | ADC | 23.51% | | | | | | | | | |
| EX7 | Diallyl terephthalate* | 69.48-76.43 | IPP | 3.19 | Ultramarine violet | 0.01 | BP-6 | 0.28 | DPD | 0.29 | 0.77-7.72 |
| | ADC | 23.51% | | | | | | | | | |
| EX8 | Diallyl phthalate ester** | 63-76.5 | IPP | 3.19 | Ultramarine violet | 0.01 | BP-6 | 0.28 | TPP | 0.4 | 0.77-7.72 |
| | ADC | 26.11 | | | | | | | | | |
| | Vinyl ester | 2.58-18.91 | | | | | | | | | |
| ** mixture of Diallyl isophthalate and terephthalate monomers | | | | | | | | | | | |

Analysis

Transmission test was performed with Agilent Cary 60 spectrometer with piano lens (Center Thickness =2.0±0.1 mm).

The optical material according to the invention has satisfactory color properties, which can be quantified by the yellowness index Yi. This parameter is disclosed in the following table (TABLE II). The degree of whiteness of the inventive optical material may be quantified by means of colorimetric measurements, based on the CIE tristimulus values X, Y, Z such as described in the standard ASTM E313 with illuminant C observer 2°. The optical article according to the invention preferably has a low yellowness index Yi, i.e., lower than 8, more preferably lower than 7, even better lower than 6, as measured according to the above standard. The yellowness index Yi is calculated per ASTM method E313 through the relation Yi = (127.69 X - 105.92 Z) / Y, where X, Y, and Z are the CIE tristimulus values.

TABLE II disclose the wavelength where the transmission begins to be below 1%, giving the range of blue light cut (UV cut). This parameter is one indicator to evaluate the blue cut performance.

TABLE II also reveals integral calculation values results regarding transmittance for wavelength range between 385 nm and 415 nm, between 415 nm and 445nm, between 445 nm and 475 nm and between 475 nm and 505 nm and yellow index. These values were determined by using the following formula disclosed in the CNIS requirements:

$$T(\lambda_1 - \lambda_2) = \frac{\int_{\lambda_2}^{\lambda_1} E_1(\lambda)\, d(\lambda)}{\int_{\lambda_2}^{\lambda_1} E_2(\lambda)\, d(\lambda)}$$

$T(\lambda_1-\lambda_2)$ is the transmission between $\lambda_1$ and $\lambda_2$. E1 ($\lambda$) d ($\lambda$) is the light intensity coming out of the lens substrate and E0 ($\lambda$) d($\lambda$) the light intensity before entering the lens substrate. The requirements needed are a transmittance inferior to 75% between 385 nm and 415 nm, a transmission inferior or equal to 80% between 415 nm and 445 nm, a transmission superior to 80% between 445 nm and 475 nm and between 475 nm and 505 nm.

Cosmetic aspects of the lens were also analyzed. "Y" means there is no imperfection such as haze, soft, yellowness or broken edges and that lens is transparent.

TABLE II

| | UV Cut(nm) | T% 375-415nm | T% 415-445nm | T% 445-475nm | T% 475-505nm | YI(2°) | Cosmetic |
|---|---|---|---|---|---|---|---|
| Counter EX1 | 326.7 | 88.64 | 90.24 | 90.58 | 90.78 | 1.09 | Y |
| Counter EX2 | 405.6 | 3.00 | 66.73 | 89.21 | 90.60 | 8.91 | Y |
| Counter EX3 | 405.0 | 3.28 | 63.78 | 87.76 | 89.67 | 8.39 | Y |
| Counter EX4 | 405.0 | 3.32 | 66.08 | 88.35 | 89.67 | 8.10 | Y |
| Counter EX5 | 404.9 | 3.57 | 69.65 | 88.96 | 89.45 | 6.37 | Broken edge |
| EX1 | 403.7 | 4.14 | 70.75 | 89.42 | 89.83 | 5.83 | Y |
| EX2 | 405.3 | 3.23 | 67.84 | 88.52 | 89.22 | 7.01 | Y |
| EX3 | 405.3 | 3.31 | 68.36 | 88.77 | 89.43 | 6.91 | Y |
| EX4 | 405.3 | 3.19 | 67.13 | 88.85 | 89.45 | 6.55 | Y |
| EX5 | 405.8 | 2.90 | 66.82 | 88.63 | 89.57 | 6.84 | Y |
| EX6 | 405.0 | 3.48 | 69.02 | 89.15 | 89.74 | 6.49 | Y |
| EX7 | 405.0 | 3.51 | 69.01 | 89.08 | 89.68 | 6.55 | Y |
| EX8 | 405.3 | 3.00 | 65.09 | 88.46 | 89.57 | 7.37 | Y |

The results from example 1 to 8 when compared to counter example 1 to 5 have a yellow index lower and do not present any imperfections from an esthetic point when using a phosphite based molecule in a range of amount comprised between 0.3 % wt and 1 % wt. These lenses also meet the requirements of transmissions disclosed in the technical requirements on application of light health and light safety of coating for protection against blue light established by the China National Institute of Standardization (CNIS). Regarding the results obtained for counter example 4, the presence of 0.1 % wt of phosphite based molecule is not enough to provide a satisfactory yellow index. Regarding the results obtained for counter example 5, although the data obtained was optimal regarding the transmission values and the yellow index, the lens obtained had broken edges. The excess phosphite based molecule increases the lens hardness, hence an optimal resistance against scratches. However, it also decreases the toughness of the substrate, which make it easy to break during the disassembly of the lens from the molding system.

To make sure the light transmission performances would not be disturbed by the application of coatings, samples were also prepared with the same amounts as disclosed in TABLE I this time with several layers of coatings of different kind.

TABLE III disclose the results obtained from lens sample with one or several coating layers applied their surfaces. The example references are based on the polymerizable composition disclosed in TABLE I.

TABLE III

| | UV Cut(nm) | T% 375-415nm | T% 415-445nm | T% 445-475nm | T% 475-505nm |
|------|------------|--------------|--------------|--------------|--------------|
| EX1 | 404.2 | 4.52 | 78.02 | 97.73 | 96.79 |
| EX2 | 405.3 | 3.50 | 75.05 | 97.22 | 96.88 |
| EX4 | 405.1 | 3.80 | 76.47 | 96.82 | 95.85 |
| EX6 | 405.2 | 3.54 | 75.26 | 97.06 | 95.78 |
| EX8 | 405.6 | 3.24 | 74.67 | 96.89 | 96.21 |
| EX9 | 405.0 | 4.00 | 76.79 | 97.27 | 96.14 |
| EX10 | 404.9 | 3.88 | 76.64 | 97.15 | 96.02 |
| EX12 | 405.2 | 3.40 | 73.28 | 96.63 | 95.97 |

The coating applied on each lens has an anti-reflective function and includes the following layers:

- Layer 1: Hard coating layer directly in contact with the lens and with a thickness comprised between 2.5 $\mu$m and 4.0 $\mu$m with VH-10 from Don Optics, China.
- Layer 2: $SiO_2$ coating layer with a thickness comprised between 130 nm and 145 nm.
- Layer 3: $ZrO_2$ coating layer with a thickness comprised between 25 nm and 34 nm.
- Layer 4: $SiO_2$ coating layer with a thickness comprised between 15 nm and 22 nm.
- Layer 5: $ZrO_2$ coating layer with a thickness comprised between 50 nm and 64 nm.
- Layer 6: ITO coating layer with a thickness comprised between 3 nm and 6 nm.
- Layer 7: $SiO_2$ coating layer with a thickness comprised between 85 nm and 92 nm.

The results from example 1 to 8 reveals an increase of the transmittance with addition of the coating when comparing to the results obtained with samples without coating for every wavelength range. However, the lenses of the presence invention still meet the requirements of transmissions for the four ranges of wavelength.

## Claims

1. A polymerizable composition for making thermosetting materials containing allylic monomers and/or oligomers and diisopropyl peroxydicarbonate (IPP) as an initiator, wherein said composition comprises:

    • A UV absorber in an amount ranging from 0.1 to 2 % wt,
    • A phosphite based molecule in an amount ranging from 0.2% wt to 1% wt.

2. The polymerizable composition of claim 1, wherein said composition comprises a first allylic monomer and/or oligomer which is aromatic, in an amount ranging from 65% wt to 95 %wt.

3. The polymerizable composition of claims 1 or 2, wherein said composition comprises a second allylic monomer and/or oligomer in an amount ranging from 10% wt to 30 %wt.

4. The polymerizable composition according to anyone of claims 1 to 3, wherein said composition comprises diisopropyl peroxydicarbonate (IPP) in an amount of at least 3 % wt.

5. The polymerizable composition according to anyone of claims 1 to 4, wherein said composition comprises at least one mineral pigment in an amount ranging from 0.0007% wt to 0.02% wt.

6. The polymerizable composition according to anyone of claims 1 to 4, wherein the mineral pigment is aluminium sodium orthosilicate tetrathietane (3:3:3:1).

7. The polymerizable composition according to anyone of claims 1 to 6 wherein the first monomer is chosen from the following group: diallyl phthalate, diallyl phthalate oligomers, diallyl isophthalate, diallyl isophthalate oligomers, diallyl terephthalate, diallyl terephthalate oligomers or a mixture of them.

8. The polymerizable composition according to anyone of claims 1 to 7, wherein the second monomer and/or oligomer is diallyl diglycol carbonate.

9. The polymerizable composition according to any one of claims 1 to 8 wherein a third monomer and/or oligomer(s) is incorporated in an amount ranging from 2%wt to 20%wt.

10. The polymerizable composition according to anyone of claims 1 to 9, wherein the UV absorber is a benzophenone-based molecule.

11. The polymerizable composition according to anyone of claims 1 to 10, wherein the UV absorber is 2,2'-dihydroxy-4,4'-dimethoxybenzophenone.

12. The polymerizable composition according to anyone of claims 1 to 11,wherein the phosphite based molecule is chosen from the following group: triphenyl phosphite, diisodecyl pentaerythritol diphosphite, tripropyl phosphite, tributyl phosphite, tris(2-ethylhexyl) phosphite, trisdecyl phosphite, triisodecyl phosphite, triisotridecyl phosphite, trioctadecyl phosphite, tris(nonylphenyl) phosphite, diphenyl decyl phosphite, diphenyl isodecylphosphite, diphenyl isooctyl phosphite, bis(2-ethylhexyl) phenyl phosphite, phenyl didecyl phosphite, phenyl diisodecyl phosphite, poly(dipropyleneglycol)phenyl phosphite, O,O'-Dioctadecylpentaerythritol bis(phosphite), bis(2,4-di-tert-butylphenyl) pentaerythritol diphosphite or a mixture of them.

13. A process for making an optical article using a polymerizable composition and having a refractive index of 1.50 or above containing allylic monomers and/or oligomers and diisopropyl peroxydicarbonate (IPP) as an initiator, wherein the said composition comprises:

   • A UV absorber in an amount ranging from 0.1 to 2 % wt,
   • A phosphite based molecule in an amount ranging from 0.2% wt to 1%wt.

14. A lens made from a polymerizable composition, having a refractive index of 1.50 or above containing allylic monomers and/or oligomers and diisopropyl peroxydicarbonate (IPP) as an initiator, wherein the said composition comprises:

   • A UV absorber in an amount ranging from 0.1 to 2 % wt,
   • A phosphite based molecule in an amount ranging from 0.2% wt to 1% wt.

**EUROPEAN SEARCH REPORT**

Application Number

EP 24 31 5588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2003 0045801 A (SHOWA DENKO) 11 June 2003 (2003-06-11) | 1-4, 7-10, 12-14 | INV. G02B1/04 C08F2/02 |
| Y | * Pages: 2, 17, 20-21, 26, 29-31 * * claim 1 * * tables 1, 2 * * Production Examples 1-5 Examples 1-10 * | 5,6,11 | C08F2/44 C08F218/18 C08K5/132 C08K5/526 |
| T | Anonymous: "CR-39 - Wikipedia", , 2 December 2024 (2024-12-02), pages 1-4, XP093274907, Retrieved from the Internet: URL:https://en.wikipedia.org/wiki/CR-39 * page 1 * | 1-14 | |
| Y | US 2014/080972 A1 (SLEZAK BRANDY D [US] ET AL) 20 March 2014 (2014-03-20) * claim 1 * * paragraphs [0002], [0004], [0084] * * Examples 1, 4 * * tables 1, 3 * | 5,6 | |
| Y | EP 3 382 428 A1 (ESSILOR INT [FR]) 3 October 2018 (2018-10-03) * paragraphs [0001], [0009] * * claims 1, 2, 7 * * table 1 * | 6,11 | TECHNICAL FIELDS SEARCHED (IPC) G02B C08F C08K |
| T | Anonymous C I: "CAS 12769-96-9 C.I. Pigment Violet 15 - Alfa Chemistry", , 7 May 2025 (2025-05-07), pages 1-3, XP093275061, Retrieved from the Internet: URL:https://www.alfa-chemistry.com/cas_127 69-96-9.htm * page 1 * | 6,11 | |

The present search report has been drawn up for all claims

| Place of search | Date of completion of the search | Examiner |
|---|---|---|
| The Hague | 9 May 2025 | Smit, Theo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 4 764 621 A1

## ANNEX TO THE EUROPEAN SEARCH REPORT
## ON EUROPEAN PATENT APPLICATION NO.

EP 24 31 5588

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | | Publication date | Patent family member(s) | | Publication date |
|---|---|---|---|---|---|
| KR 20030045801 A | | 11-06-2003 | JP | 2003066201 A | 05-03-2003 |
| | | | KR | 20030045801 A | 11-06-2003 |
| US 2014080972 A1 | | 20-03-2014 | CN | 104641262 A | 20-05-2015 |
| | | | HK | 1206105 A1 | 31-12-2015 |
| | | | US | 2014080972 A1 | 20-03-2014 |
| | | | WO | 2014043473 A1 | 20-03-2014 |
| EP 3382428 A1 | | 03-10-2018 | BR | 112019019113 A2 | 14-04-2020 |
| | | | CN | 110392848 A | 29-10-2019 |
| | | | EP | 3382428 A1 | 03-10-2018 |
| | | | EP | 3602148 A1 | 05-02-2020 |
| | | | US | 2020088909 A1 | 19-03-2020 |
| | | | WO | 2018178112 A1 | 04-10-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS*, 1026-92-2
- *CHEMICAL ABSTRACTS*, 142-22-3
- *CHEMICAL ABSTRACTS*, 105-64-6
- *CHEMICAL ABSTRACTS*, 131-54-4
- *CHEMICAL ABSTRACTS*, 101-02-0
- *CHEMICAL ABSTRACTS*, 80584-86-7
- *CHEMICAL ABSTRACTS*, 26544-27-4
- *CHEMICAL ABSTRACTS*, 12739-96-9
- *CHEMICAL ABSTRACTS*, 57455-37-5
- *CHEMICAL ABSTRACTS*, 980-26-7